(19) **Europäisches Patentamt**

**European Patent Office**

**Office européen des brevets**

(11) Veröffentlichungsnummer: **0 284 895 B1**

(12) **EUROPÄISCHE PATENTSCHRIFT**

(45) Veröffentlichungstag der Patentschrift: **30.12.92**

(51) Int. Cl.⁵: **B60C 23/04**, G01L 17/00

(21) Anmeldenummer: **88104184.2**

(22) Anmeldetag: **16.03.88**

(54) **Verfahren zum fülldruckrichtigen Befüllen eines Luftreifens eines Fahrzeuges mit einer Luftreifenfülldrucküberwachungseinrichtung.**

(30) Priorität: **17.03.87 DE 3708677**

(43) Veröffentlichungstag der Anmeldung:
**05.10.88 Patentblatt 88/40**

(45) Bekanntmachung des Hinweises auf die Patenterteilung:
**30.12.92 Patentblatt 92/53**

(84) Benannte Vertragsstaaten:
**DE ES FR GB IT SE**

(56) Entgegenhaltungen:
**EP-A- 0 019 463      EP-A- 0 045 401**
**EP-A- 0 083 771      EP-A- 0 201 149**
**EP-B- 0 042 790      DE-B- 2 461 212**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Ramböck, Josef**
**Linnenbrüggerstrasse 31**
**W-8000 München 82(DE)**
Erfinder: **Schurk, Hans-Eberhard**
**Ahornstrasse 12**
**W-8062 Marktindersdorf(DE)**
Erfinder: **Weishaupt, Walter**
**Am Wismat 28**
**W-8000 München 60(DE)**
Erfinder: **Riedl, Helmut**
**Heufelderstrasse 4**
**W-8000 München 80(DE)**
Erfinder: **Rott, Erich**
**Dinkelscherbener Strasse 13**
**W-8900 Augsburg 22(DE)**
Erfinder: **Bruns, Hartmut**
**Turfstrasse 24**
**W-8000 München 81(DE)**
Erfinder: **Kindermann, Siegfried**
**Nikolaus-Lenau-Str. 27**
**W-8047 Karlsfeld(DE)**

## Beschreibung

Die Erfindung betrifft ein Verfahren zum fülldruckrichtigen Befüllen eines Luftreifens eines Fahrzeuges mit einer fahrzeugeigenen Luftreifenfülldrucküberwachungseinrichtung nach dem Oberbegriff des Patentanspruchs 1.

Ein derartiges Verfahren ist bereits aus der EP-A3-0 201 149 bekannt. Bei der aus der EP-A3-0 201 149 bekannten Reifenfülldrucküberwachungseinrichtung wird der Sollwert/Istwert-Vergleich des Reifenluftdrucks mit Hilfe eines im jeweiligen Fahrzeugreifen angeordneten Druckschalters vorgenommen und lediglich das Vergleichsergebnis auf elektromagnetischem Wege zu einem Empfänger übertragen. Für den Fall, daß der Reifendruck eines Fahrzeugreifens zu niedrig ist, werden von einem vom Empfänger angesteuerten Alarmgeber für eine kurze Zeit ein akustisches Signal erzeugt sowie eine einen zu niedrigen Luftdruck anzeigende Warnlampe angeschaltet. Beim Befüllen des Reifens auf den gewünschten Solldruck wird erneut ein akustisches Signal erzeugt sowie die einen zu niedrigen Reifendruck anzeigende Warnlampe ausgeschaltet. Da bei der bekannten Reifenfülldrucküberwachungseinrichtung der Sollwert/Istwert-Vergleich des Reifendrucks mit Hilfe eines Druckschalters im Fahrzeugreifen vorgenommen wird, kann der Istwert des Reifendrucks jeweils nur mit einem konstanten, durch den Druckschalter vorgegebenen Sollwert verglichen werden, der die im jeweiligen Fahrzeugreifen gerade vorherrschende Lufttemperatur sowie den Beladungszustand des Fahrzeuges nicht berücksichtigen kann. Da bei der bekannten Fülldrucküberwachungseinrichtung die den Reifenluftdruck-Sollwert bestimmenden Parameter, wie beispielsweise die Lufttemperatur im Fahrzeugreifen, nicht berücksichtigt werden können, ist das aus der EP-A3-0 201 149 bekannte Verfahren zur Reifenfülldrucküberwachung sehr ungenau.

Es ist daher Aufgabe der Erfindung, ein Verfahren eingangs genannter Art anzugeben, das ein äußerst fülldruckgenaues Befüllen der Luftreifen eines mit einer Luftreifenfülldrucküberwachungseinrichtungausgerüsteten Fahrzeuges ermöglicht.

Diese Aufgabe wird erfindungsgemäß durch die kennzeichnenden Merkmale des Patentanspruchs 1 gelöst.

Bei dem erfindungsgemäßen Verfahren wird beim Befüllen eines Fahrzeugluftreifens laufend der jeweils aktuelle Istwert des Fülldruckes des betreffenden Fahrzeug-Luftreifens von der diesem zugeordneten Sensoreinrichtung ermittelt und zur zentralen Überwachungseinheit der fahrzeugeigenen Luftreifenfülldrucküberwachungseinrichtung übertragen. Dort werden die ermittelten Istwerte des Fülldruckes laufend mit dem für den betreffenden Fahrzeugreifen unter Berücksichtigung beispielsweise der Lufttemperatur im Fahrzeugreifen und des Beladungszustandes des Fahrzeuges bestimmten Fülldruck-Sollwert zur Ermittlung des jeweiligen einen zu hohen, einen zu niedrigen oder den ordnungsgemäßen Fülldruck angebenden Fülldruckzustandes verglichen. Dieser von der zentralen Überwachungseinheit der fahrzeugeigenen Luftreifenfülldrucküberwachungseinrichtung ermittelte Fülldruckzustand des betreffenden Luftreifens wird während des Befüllvorganges ständig der Bedienperson des Befüllgerätes übermittelt. Gibt der von der zentralen Überwachungseinheit übermittelte Fülldruckzustand an, daß der Fülldruck des gerade befüllten Luftreifens noch zu niedrig ist, so wird die Bedienperson des Befüllgerätes den Fülldruck im Reifen solange erhöhen, bis ihr als Fülldruckzustand übermittelt wird, daß der Fülldruck-Istwert im gerade befüllten Luftreifen mit dem entsprechenden Sollwert übereinstimmt, der Fülldruck im Luftreifen also genau richtig ist.

Da bei dem erfindungsgemäßen Verfahren der Befüllvorgang von der fahrzeugeigenen Luftreifenfülldrucküberwachungseinrichtung gesteuert bzw. geführt wird, ist es weder erforderlich, etwaige Fülldruck-Sollwerte in der Betriebsanleitung des Fahrzeuges nachzuschlagen noch den Istwert des Fülldruckes mit Hilfe der relativ ungenauen Relativdruckanzeige des Befüllgerätes zu bestimmen. Da beim erfindungsgemäßen Verfahren der Fülldruck-Sollwert für einen Luftreifen individuell, d. h. beispielsweise in Abhängigkeit von der Lufttemperatur im Reifen oder des Beladungszustandes des Fahrzeuges bestimmt wird ferner der Fülldruck-Istwert von der dem betreffenden Luftreifen zugeordneten Sensoreinrichtung hochgenau ermittelt wird und schließlich der Vergleich der gemessenen Fülldruck-Istwerte mit dem individuell bestimmten Fülldruck-Sollwert automatisch in der zentralen Überwachungseinheit der Luftreifenfülldrucküberwachungseinrichtung erfolgt, wodurch jegliche Anzeige- und Ableseungenauigkeiten vermieden werden können, können die Luftreifen eines mit einer Luftreifenfülldrucküberwachungseinrichtung ausgerüsteten Fahrzeuges bei Anwendung des erfindungsgemäßen Verfahrens mit größtmöglicher Fülldruckgenauigkeit befüllt werden.

Während des Befüllens eines Luftreifens mit Hilfe eines separaten Befüllgerätes kann der zur Befüllführung von der zentralen Überwachungseinheit jeweils ermittelte aktuelle Fülldruckzustand des betreffenden Luftreifens auf unterschiedliche Weise zur Bedienperson des Befüllgerätes übermittelt werden.

Nach einer ersten Möglichkeit erfolgt die Übermittlung des jeweiligen Fülldruckzustandes von der zentralen Überwachungseinheit zur Bedienperson des Befüllgerätes auf akustischem Wege, insbesondere durch ein akustisches Signal mit für die einzelnen Fülldruckzustände unterschiedlichen Frequenzen oder Lautstärken. Dazu können entweder Einzellautsprecher an den Fahrzeugrädern oder auch ein einziger zentral im Fahrzeug angeordneter Lautsprecher vorgesehen sein.

Gemäß einer weiteren Möglichkeit erfolgt die Übermittlung des jeweiligen Fülldruckzustandes von der zentralen Überwachungseinheit zur Bedienperson des Befüllgerätes durch Ansteuerung der Blinklampen des Fahrzeuges mit für die einzelnen Fülldruckzustände unterschiedlichen Frequenzen.

Schließlich wird gemäß einer dritten Übermittlungsmöglichkeit der jeweilige Fülldruckzustand von der zentralen Überwachungseinheit zu einer von der Bedienperson des Befüllgerätes mitgeführten Fülldruckzustandsanzeigeeinrichtung übertragen und durch diese der Bedienperson angezeigt.

Bei dieser zuletzt genannten Art der Übermittlung des Fülldruckzustandes von der zentralen Überwachungseinheit zur Bedienperson des Befüllgerätes kann die Übertragung des jeweiligen Fülldruckzustandes von der zentralen Überwachungseinheit zur Fülldruckzustandsanzeigeeinrichtung wiederum auf verschiedene Weise erfolgen.

Gemäß einer ersten Übertragungsmöglichkeit wird der jeweilige Fülldruckzustand über eine elektrische Kabelverbindung von der zentralen Überwachungseinheit zur Fülldruckzustandsanzeigeeinrichtung übertragen.

Alternativ dazu kann der jeweilige Fülldruckzustand zumindest teilweise auf optischem Wege von der zentralen Überwachungseinheit zur Fülldruckzustandsanzeigeeinrichtung übertragen werden.

Dies kann beispielsweise dadurch erfolgen, daß der jeweilige Fülldruckzustand eines Luftreifens zunächst über eine elektrische Kabelverbindung zu einer an der Fahrzeugseite des betreffenden Luftreifens angeordneten optischen Sendeeinrichtung und dann von dort auf optischem Wege zu einer in der Fülldruckzustandsanzeigeeinrichtung angeordneten optischen Empfangseinrichtung übertragen wird. Vorzugsweise werden dabei bei einem Fahrzeug mit auf beiden Fahrzeugseiten angeordneten Außenrückblickspiegeln die für beide Fahrzeugseiten vorgesehenen optischen Sendeeinrichtungen in oder an den Gehäusen bzw. Halterungen der Außenrückblickspiegel angeordnet.

Gemäß einer bevorzugten Verfahrensvariante wird der jeweilige Fülldruckzustand zumindest teilweise auf elektromagnetischem Wege von der zentralen Überwachungseinheit zur Fülldruckzustandsanzeigeeinrichtung übertragen. Diese Art der Übertragung eignet sich insbesondere bei einem Fahrzeug mit einer Luftreifenfülldrucküberwachungseinrichtung besonders gut, bei der sowohl die Energieübertragung von der zentralen Überwachungseinheit zu den Sensoreinrichtungen als auch die Meßwertübertragung von den Sensoreinrichtungen zu der zentralen Überwachungseinheit auf elektromagnetischem Wege erfolgt. Dies soll im folgenden anhand einer derartigen Luftreifenfülldrucküberwachungseinrichtung erläutert werden. Eine solche umfaßt beispielsweise in Nähe der Räder des Fahrzeuges angeordnete ortsfeste Übertragerspulen. Diese sind einerseits zur Energieversorgung der mit den Fahrzeugrädern umlaufenden Sensoreinrichtungen an einen in der zentralen Überwachungseinheit integrierten Wechselspannungsgenerator und andererseits zur Übertragung mindestens des Fülldruck-Istwertes in den einzelnen Luftreifen in den Spannungspausen des Wechselspannungsgenerators an die Auswerteeinheit der zentralen Überwachungseinheit angeschlossen. Ferner sind bei einer solchen Luftreifenfülldrucküberwachungseinrichtung weitere, an den einzelnen Fahrzeugrädern befestigte und mit diesen umlaufende Übertragerspulen vorgesehen, die mit den ortsfesten Übertragerspulen zusammenwirken. Die umlaufenden Übertragerspulen sind zur Energieversorgung einerseits und zur Übertragung mindenstens des Fülldruck-Istwertes in den einzelnen Luftreifen andererseits mit den Sensoreinrichtungen in den einzelnen Fahrzeugluftreifen verbunden. Bei einer derartigen Luftreifenfülldrucküberwachungseinrichtung wird der jeweilige Fülldruckzustand eines gerade befüllten Luftreifens vorzugsweise durch Amplituden- oder Pausenkodierung des Wechselspannungssignals des Wechselspannungsgenerators zu dem Radübertrager des betreffenden Luftreifens übertragen. Der jeweilige Fülldruckzustand des Luftreifens wird dann von der beim Befüllen, von der Bedienperson des Befüllgerätes mitgeführten Fülldruckzustandsanzeigeeinrichtung durch Dekodieren des während der Übertragung des Wechselspannungssignals vom Radübertrager erzeugten elektromagnetischen Streufeldes regeneriert und angezeigt. Vorzugsweise wird bei der Pausenkodierung des Wechselspannungssignals dieses an einer bestimmten Stelle für eine vom jeweiligen Fülldruckzustand des gerade befüllten Luftreifens abhängige Zeitspanne unterbrochen.

Da der Fülldruckzustand eines Reifens nur während eines Befüllvorganges zur Bedienperson eines Befüllgerätes übermittelt werden muß, wird die zentrale Überwachungseinheit vorzugsweise nur während des Befüllens eines Luftreifens vom Überwachungsmodus, bei dem die Fülldrücke der einzelnen Luftreifen lediglich überwacht und ein kritischer Fülldruckzustand eines Luftreifens im Fahrzeug angezeigt wird, in den Befüllmodus umgeschaltet, bei dem der von der zentralen Überwachungseinheit jeweils nur für den gerade befüllten Luftreifen ermittelte aktuelle Fülldruckzustand der Bedienperson des Befüllgerätes zur Befüllführung übermittelt wird.

Vorzugsweise wird im Befüllmodus der zentralen Überwachungseinheit mindestens der Istwert des Fülldruckes des gerade befüllten Luftreifens mit einer im Vergleich zur Abfragefrequenz im Überwachungsmodus der zentralen Überwachungseinheit deutlich höheren Frequenz abgefragt. Es ist dadurch gewährleistet, daß auch bei steilem Druckanstieg während des Befüllens eines Luftreifens der als Meßwert vorliegende Istwert mit dem im Luftreifen herrschenden tatsächlichen Fülldruck mit größtmöglicher Genauigkeit übereinstimmt.

Vorteilhaft ist die Abfragefrequenz im Befüllmodus der zentralen Überwachungseinheit um den Faktor 4 oder 5 größer als die Abfragefrequenz im Überwachungsmodus der zentralen Überwachungseinheit. Dies läßt sich in einfacher Weise dadurch realisieren, daß im Befüllmodus, im Gegensatz zum Überwachungsmodus, bei dem die Fülldruckistwerte aller Luftreifen eines Fahrzeuges zyklisch abgefragt werden, lediglich die jeweiligen Fülldruckistwerte des gerade befüllten Fahrzeugreifens ermittelt werden.

Vorteilhaft wird die zentrale Überwachungseinheit bei Feststellen einer großen Änderung, insbesondere eines steilen Anstiegs des Istwertes des Fülldruckes in einem der Luftreifen des Fahrzeuges vom Überwachungsmodus in den Befüllmodus umgeschaltet.

Alternativ dazu wird die zentrale Überwachungseinheit bei Fahrzeugluftreifen, die jeweils über ein Reifenventil mit darin verschiebbar angeordnetem Ventilglied befüllbar sind, in Abhängigkeit von der Stellung bzw. Verschiebebewegung des Ventilgliedes vom Überwachungsmodus in den Befüllmodus umgeschaltet.

Im folgenden sollen verschiedene Ausbildungen einer Reifenfülldrucküberwachungseinrichtung mit den einzelnen Fahrzeugluftreifen zugeordneten Sensoreinrichtungen zur Messung und Übertragung mindestens des Fülldruckes der einzelnen Luftreifen zu der vom Überwachungsmodus in den Befüllmodus umschaltbaren zentralen Überwachungseinheit beschrieben werden, bei denen die Sensoreinrichtung eines gerade über ein Reifenventil mit darin verschiebbar angeordnetem Ventilglied befüllten Luftreifens in der Offenstellung des Ventilgliedes bzw. aufgrund der Verschiebebewegung von der Geschlossen- in die Offenstellung ein Befüllmodus-Signal erzeugt und zur zentralen Überwachungseinheit überträgt, durch das diese in den Befüllmodus umgeschaltet wird.

Bei der erfindungsgemäßen Reifenfülldrucküberwachungseinrichtung erfolgt die Umschaltung vom Überwachungsmodus in den Befüllmodus nur für den Zeitraum, in dem mindestens einer der Luftreifen des Fahrzeuges tatsächlich befüllt wird. Zur Feststellung des Zeitpunktes bzw. des Zeitraumes, in dem ein Luftreifen befüllt wird, wird bei der erfindungsgemäßen Einrichtung die Stellung des Ventilgliedes bzw. eine etwaige Verschiebebewegung des Ventilgliedes von der Geschlossen- in die Offenstellung festgestellt und zur Erzeugung des Befüllmodus-Signals ausgewertet.

Nach einer ersten Ausbildung der erfindungsgemäßen Reifenfülldrucküberwachungseinrichtung umfaßt jede Sensoreinrichtung zwei elektrische Kontakte, die durch das Ventilglied bei Erreichen seiner Offenstellung zur Erzeugung des Befüllmodus-Signals miteinander galvanisch verbunden werden. Vorzugsweise sind dabei die elektrischen Kontakte im Inneren des Ventilkörpers nahe dem dem Reifeninneren zugewandten Ende des Reifenventiles elektrisch isoliert angeordnet und ist das die elektrischen Kontakte ggf. verbindende Teil des Ventilglieds an dessen übrigen Teil elektrisch isoliert angeordnet. Diese Ausführungsform der erfindungsgemäßen Einrichtung zeichnet sich insbesondere durch ihren einfachen und kostengünstigen Aufbau aus.

Eine Reifenfülldrucküberwachungseinrichtung mit einem Reifenventil, dessen Ventilglied durch eine Vorspannfeder in Richtung seiner Geschlossenstellung belastet ist, zeichnet sich in einer zweiten Ausführungsform der erfindungsgemäßen Einrichtung dadurch aus, daß jede Sensoreinrichtung ein piezoelektrisches Element umfaßt, an dem sich ein Ende der Vorspannfeder abstützt und das aufgrund der Zunahme der auf das piezoelektrische Element einwirkenden Federkraft beim Verschieben des Ventilgliedes von der Geschlossen- in die Offenstellung das Befüllmouds-Signal erzeugt. Diese Ausführungsform ist besonders schmutzunempfindlich und zeichnet sich dadurch durch ihre geringe Störanfälligkeit aus.

Bei der Fülldrucküberwachung von Luftreifen mit einem Reifenventil, dessen Ventilglied mindestens teilweise aus einem ferromagnetischen Material besteht, umfaßt jede Sensoreinrichtung der Reifenfülldrucküberwachungseinrichtung gemäß einer dritten Ausführungsform eine elektromagnetische Spule, in die zumindest der ferromagnetische Teil des Ventilgliedes bei Erreichen seiner Offenstellung eintaucht und dabei in der Spulenwicklung das Befüllmodus-Signal erzeugt. Dieses in der Spulenwicklung induzierte Signal wird in der Sensoreinrichtung aufbereitet und von dort zur zentralen Überwachungseinheit übertragen.

Nach einer vierten Ausführungsform der erfindungsgemäßen Einrichtung umfaßt jede Sensoreinrichtung einen Kondensator, dessen eine Elektrode elektrisch isoliert im Inneren des Ventilkörpers ortsfest angeordnet ist und dessen andere Elektrode am Ventilglied derart elektrisch isoliert befestigt ist, daß eine Verschiebung des Ventilgliedes von der Geschlossen- in die Offenstellung eine Kapazitätsänderung des Kondensators bewirkt. Wird bei dieser Ausführungsform der erfindungsgemäßen Einrichtung in einer der Sensoreinrichtungen eine abrupte Kapazitätsänderung des Kondensators festgestellt, so wird von der betreffenden Sensoreinrichtung das Befüllmodus-Signal erzeugt. Dieses wird zur zentralen Überwachungseinheit übertragen, um diese in die Betriebsart "Befüllen" umzuschalten.

Aufgrund der weitgehend zylindrischen Form des Reifenventils hat es sich als vorteilhaft herausgestellt, den Kondensator als Zylinderkondensator auszubilden.

Schließlich umfaßt jede Sensoreinrichtung nach einer fünften Ausführungsform der erfindungsgemäßen Einrichtung einen im Inneren des Ventilkörpers angeordneten Hall-Sensor, der bei durch die Verschiebebewegung des Ventilgliedes von der Geschlossen- in die Offenstellung bedingten Annäherung eines am Ventilglied angeordneten Magneten das Befüllmodus-Signal erzeugt. Dieses Befüllmodus-Signal wird in der Sensoreinrichtung aufbereitet und zur zentralen Überwachungseinheit übertragen, die bei Empfang eines entsprechenden Signales in den Befüllmodus umgeschaltet wird.

Weitere Einzelheiten, Merkmale und Vorteile der Erfindung ergeben sich aus der nachfolgenden Beschreibung der in den Figuren dargestellten Ausführungsbeispiele.

Es zeigen

Fig. 1    ein Blockschaltbild einer Luftreifenfülldrucküberwachungseinrichtung mit einer in Nähe eines Luftreifens angeordneten Fülldruckzustandsanzeigeeinrichtung,

Fig. 2    ein Blockschaltbild der in Fig. 1 gezeigten Fülldruckzustandsanzeigeeinrichtung,

Fig. 3    den unteren Teil eines Reifenventils in Schnittdarstellung zusammen mit einer Sensoreinrichtung mit einer elektrischen Kontaktanordnung,

Fig. 4    den unteren Teil eines Reifenventils in Schnittdarstellung zusammen mit einer Sensoreinrichtung mit einem piezoelektrischen Element,

Fig. 5    den unteren Teil eines Reifenventils in Schnittdarstellung zusammen mit einer Sensoreinrichtung mit einer elektromagnetischen Spulenanordnung,

Fig. 6    den unteren Teil eines Reifenventils in Schnittdarstellung zusammen mit einer Sensoreinrichtung mit einer Zylinderkondensatoranordnung und

Fig. 7    den unteren Teil eines Reifenventils in Schnittdarstellung zusammen mit einer Sensoreinrichtung mit einem Hall-Sensor.

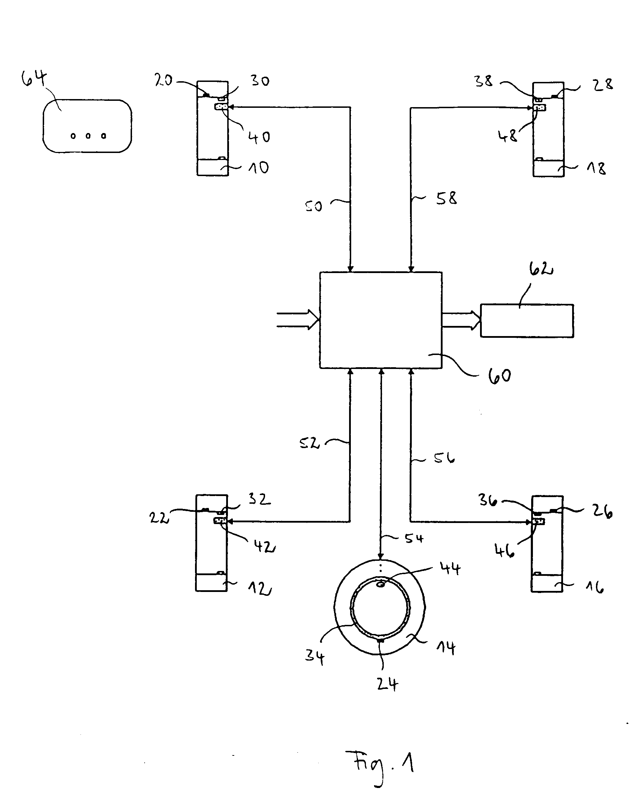

Bei der in Fig. 1 schematisch dargestellten Luftreifenfülldrucküberwachungseinrichtung ist jedem der Luftreifen 10, 12, 14, 16 und 18 jeweils eine Sensoreinrichtung 20, 22, 24, 26 und 28 zugeordnet, durch die mindestens der Istwert des Fülldruckes im jeweiligen Luftreifen erfaßt wird. Durch diese Sensoreinrichtungen wird vorteilhaft neben dem Istwert des jeweiligen Fülldruckes der Luftreifen zusätzlich noch die Temperatur im jeweiligen Luftreifen gemessen. Diese Sensoreinrichtungen 20, 22, 24, 26 und 28 sind mit umlaufenden an den einzelnen Fahrzeugrädern befestigten ringförmigen Übertragerspulen 30, 32, 34, 36 und 38 galvanisch verbunden. Diese mit den Fahrzeugrädern umlaufenden ringförmigen Übertragerspulen wirken mit in Nähe der Räder des Fahrzeuges ortsfest angeordneten Übertragerspulen 40, 42, 44, 46 und 48 zusammen. Diese ortsfest am Fahrzeug angeordneten Übertragerspulen sind über elektrische Kabelverbindungen 50, 52, 54, 56 und 58 mit einer zentralen Überwachungseinheit 60 verbunden. In dieser zentralen Überwachungseinheit 60 werden die von den Sensoreinrichtungen 20, 22, 24, 26 und 28 für die einzelnen Luftreifen 10, 12, 14, 16 und 18 erfaßten Fülldruck-Istwerte mit den jeweiligen Fülldruck-Sollwerten verglichen, welche in der zentralen Überwachungseinheit 60 beispielsweise unter Berücksichtigung der Lufttemperaturen in den einzelnen Luftreifen sowie des Beladungszustandes des Fahrzeuges individuell bestimmt werden. In Abhängigkeit von diesem Vergleich der Fülldruck-Istwerte mit den jeweiligen Fülldruck-Sollwerten wird dann im Fahrzeug über eine Anzeigeeinrichtung 62 für die einzelnen Luftreifen 10, 12, 14, 16 und 18 zumindest der einen zu niedrigen Fülldruck angebende Fülldruckzustand angezeigt.

Um bei einem Fahrzeug, das mit einer in der Fig. 1 dargestellten Luftreifenfülldrucküberwachungseinrichtung ausgerüstet ist, das Befüllen der einzelnen Luftreifen 10, 12, 14, 16 und 18 mit einer größeren Genauigkeit als bisher vornehmen zu können, wird während des Befüllens eines Luftreifens, hier beispielsweise des Luftreifens 10 mit Hilfe eines separaten Befüllgerätes der von der zentralen Überwachungseinheit 60 jeweils ermittelte aktuelle Fülldruckzustand des Luftreifens 10 zu einer von der Bedienperson des Befüllgerätes mitgeführten Fülldruckzustandsanzeigeeinrichtung übertragen und durch diese der Bedienperson des Befüllgerätes zur Befüllführung angezeigt. Die Bedienperson des Befüllgerätes erhält auf diese Weise während des Befüllens des Luftreifens 10 von der fahrzeugeigenen Luftreifenfülldrucküberwachungseinrichtung ständig die Information, ob der Fülldruck im gerade befüllten Reifen noch zu niedrig, bereits zu hoch oder mit dem von der zentralen Überwachungseinheit 60 bestimmten Fülldruck-Sollwert übereinstimmt. Da bei dieser Art der Befüllung des Luftreifens 10 der Befüllvorgang von der fahrzeugeigenen Luftreifenfülldrucküberwachungseinrichtung gesteuert bzw. geführt wird, ist es weder erforderlich, etwaige Fülldruck-Sollwerte in der Betriebsanleitung des Fahrzeuges nachzuschlagen, noch den Istwert des Fülldruckes mit Hilfe der relativ ungenauen Relativdruckanzeige des Befüllgerätes zu bestimmen. Da bei der erfindungsgemäßen Befüllführung der Fülldruck-Sollwert für einen Luftreifen individuell, d. h. beispielsweise in Abhängigkeit von der Lufttemperatur im Reifen oder des Beladungszustandes des Fahrzeuges bestimmt wird, ferner der Fülldruck-Istwert von der dem betreffenden Luftreifen zugeordneten Sensoreinrichtung hochgenau ermittelt wird und schließlich der Vergleich der gemessenen Fülldruck-Istwerte mit dem von der zentralen Überwachungseinheit 60 bestimmten Fülldruck-Sollwert in der zentralen Überwachungseinheit 60 der Luftreifenfülldrucküberwachungseinrichtung erfolgt, wodurch Anzeige- und Ableseungenauigkeiten vermieden werden, können die Luftreifen eines mit einer Luftreifenfülldrucküberwachungseinrichtung ausgerüsteten Fahrzeuges mit *größtmöglicher* Fülldruckgenauigkeit befüllt werden können.

Um während des Befüllens des Luftreifens 10 den jeweils aktuellen Fülldruckzustand durch die Fülldruckzustandsanzeigeeinrichtung 64 anzeigen zu können, ist es erforderlich, daß während des Befüllvorganges der von der zentralen Überwachungseinheit 60 jeweils ermittelte aktuelle Fülldruckzustand zur Fülldruckzustandsanzeigeeinrichtung 64 übertragen wird. Dies erfolgt bei dem dargestellten Ausführungsbeispiel dadurch, daß der jeweils aktuelle Fülldruckzustand zunächst von der zentralen Überwachungseinheit 60 über die elektrische Kabelverbindung 50 zur ortsfesten Übertragerspule 40 und von dort auf elektromagnetischem Wege zur Fülldruckzustandsanzeigeeinrichtung 64 übertragen wird. Im einzelnen kann die Übertragung des jeweiligen Fülldruckzustandes von der zentralen Überwachungseinheit 60 zur ortsfesten Übertragerspule 40 vorteilhaft durch entsprechende Pausenkodierung des zur Energieversorgung der Sensoreinrichtung 20 von der zentralen Überwachungseinheit 60 an die ortsfeste Übertragerspule 40 angelegten Wechselspannungssignals erfolgen. Da dieses Wechselspannungssignal in der Nähe des Luftreifens 10 ein von der Pausenkodierung des Wechselspannungssignales abhängiges Streufeld erzeugt, kann dieses von der Fülldruckzustandsanzeigeeinrichtung empfangen und dekodiert werden, so daß der jeweilige Fülldruckzustand der Bedienperson des Befüllgerätes durch die Fülldruckzustandsanzeigeeinrichtung angezeigt werden kann.

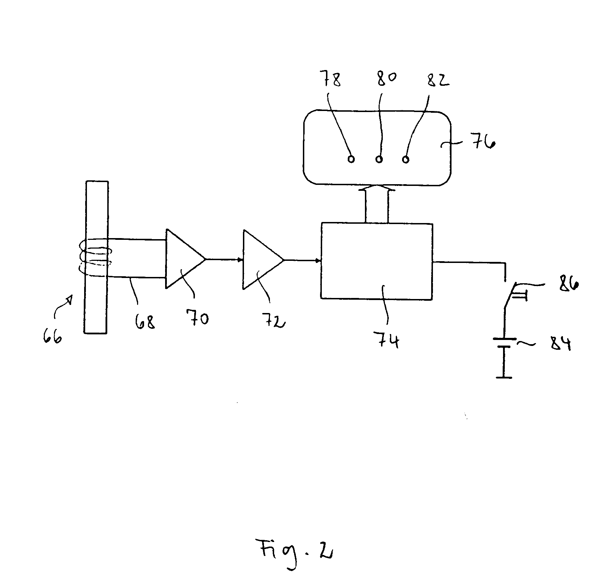

In Fig. 2 ist der prinzipielle Aufbau der in Fig. 1 gezeigten Fülldruckzustandsanzeigeeinrichtung 64 dargestellt. Dieses enthält zum Empfang des von der ortsfesten Übertragerspule während der Übertragung des pausenkodierten Wechselspannungssignales erzeugten elektromagnetischen Streufeldes eine Empfangsantenne 66, deren Wicklung 68 mit einer Verstärkerstufe 70 verbunden ist. Das Ausgangssignal der Verstärkerstufe 70 wird einer Digitalisierstufe 72 zugeführt, deren Ausgangssignal anschließend in einer Auswerteschaltung 74, beispielsweise einer Mikrocomputerschaltung ausgewertet wird. Durch diese Auswertung kann aus dem elektromagnetischen Streufeld der jeweilige von der zentralen Überwachungseinheit 60 ermittelte und von dieser durch Pausenkodierung des Wechselspannungssignales zur ortsfesten Übertragerspule des gerade befüllten Reifens übertragene Fülldruckzustand regeneriert werden. Dieser wird dann im Anzeigefeld 76 der Fülldruckzustandsanzeigeeinrichtung 64 angezeigt. Die Anzeige des jeweils aktuellen Fülldruckzustandes kann vorteilhaft durch nur drei Lampen 78, 80 und 82 erfolgen. Dabei kann beispielsweise die Lampe 78 einen zu niedrigen, die Lampe 82 einen zu hohen und die Lampe 80 den ordnungsgemäßen Fülldruck des gerade befüllten Luftreifens anzeigen. Die in Fig. 2 dargestellte Fülldruckzustandsanzeigeeinrichtung enthält eine eigene Spannungsversorgung in Form eines Akkumulators 84. Dieser versorgt bei geschlossenem Betriebsschalter 86 die Verstärkerstufe 70, die Digitalisierstufe 72, die Auswerteeinheit 74 sowie das Anzeigefeld 76 mit elektrischer Spannung.

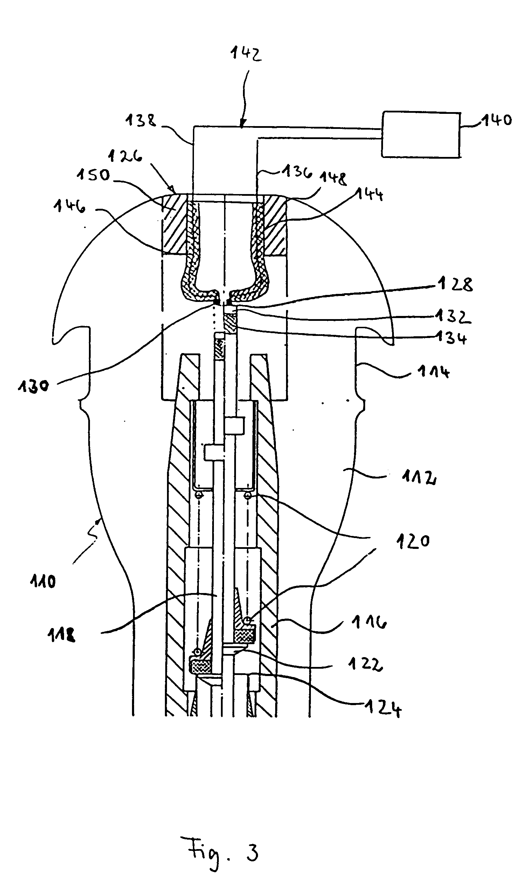

In den im folgenden beschriebenen Figuren 3 bis 7 ist jeweils der untere Teil eines Reifenventils in Schnittdarstellung zu erkennen. Dabei zeigt jeweils die linke Hälfte der Figur das Reifenventil in seiner Geschlossenstellung und die rechte Hälfte der Figur das Reifenventil in seiner Offenstellung.

Die in den Fig. 3 bis 7 dargestellten Reifenventile 110 bestehen im wesentlichen aus einem Ventilkörper 112, der mit Hilfe seiner Nut 114 in einer in den Figuren 3 bis 7 nicht dargestellten Felge eines Fahrzeugrades verankert ist, einer in den Ventilkörper 112 einvulkanisierten Ventilgliedführung 116 und einem darin in axialer Richtung verschiebbar geführten Ventilglied 118, das in Richtung seiner Geschlossenstellung (siehe linke Hälfte der Figuren 3 bis 7) durch eine Vorspannfeder 120 belastet ist. In seiner Geschlossenstellung liegt das Ventilglied 118 mit einem kegelförmig ausgebildeten Teil 122 am Ventilsitz 124 der Ventilgliedführung 116 an. Beim Befüllen eines Luftreifens mit Hilfe einer nicht dargestellten externen Luftdruckquelle wird das Ventilglied 118 durch eine von außen aufgebrachte Kraft von seiner in der linken Hälfte der Figuren 3 bis 7 dargestellten Geschlossenstellung in seine in der rechten Hälfte der Figuren 3 bis 7 dargestellten Offenstellung, in der zwischen dem kegelförmigen Teil 122 des Ventilgliedes 118 und dem Ventilsitz 124 Luft durchtreten kann, verschoben.

In das in Fig. 3 dargestellte Reifenventil 110 ist nahe seinem dem Reifeninneren zugewandten Ende eine Kontaktanordnung 126 eingesetzt. Diese besteht im wesentlichen aus zwei elektrischen Kontakten 128 und 130, die durch das Ventilglied bei Erreichen der Offenstellung des Ventilgliedes 118 miteinander galvanisch verbunden werden. Der die beiden Kontakte 128 und 130 in der Offenstellung des Ventilgliedes 118 verbindende Teil 132 ist durch eine Isolationsschicht 134 mit dem übrigen Teil des Ventilgliedes 118 fest verbunden. Die beiden elektrischen Kontakte 128 und 130 sind durch zwei elektrische Leitungen 136 und 138 mit dem Schaltungsteil 140 einer insgesamt mit 142 bezeichneten Sensoreinrichtung verbunden. Die beiden elektrischen Kontakte 128 und 130 sind an elektrisch isolierenden Haltern 144 und 146 angeordnet, welche ihrerseits über die Zwischenstücke 148 und 150 mit dem Ventilkörper 112 fest verbunden sind.

Wenn nun beim Befüllen eines Luftreifens das Ventilglied 118 in seine Offenstellung (siehe rechter Teil der Fig. 3) bewegt wird, wird durch die galvanische Verbindung der beiden Kontakte 128 und 130 in dem Schaltungsteil 140 der Sensoreinrichtung 142 ein sog. Befüllmodus-Signal erzeugt. Dieses wird durch eine beispielsweise in Fig. 1 gezeigte Übertrager-Einrichtung zu einer zentralen Überwachungseinheit 60 (Fig. 1) im Fahrzeug übertragen, um diese von der Betriebsart "Überwachen" in die Betriebsart "Befüllen" umzuschalten. In der Betriebsart "Befüllen" wird von der Überwachungseinheit zumindest der Luftdruck im Reifen und in der Regel auch die Lufttemperatur im Reifen mit einer gegenüber der Betriebsart "Überwachen" deutlich höheren Frequenz abgefragt. Aufgrund dieser Meßwerte kann in der zentralen Überwachungseinheit der jeweilige Fülldruckzustand eines gerade befüllten Luftreifens in schneller Folge ermittelt und an die Fülldruckzustandsanzeigeeinrichtung 64 (Fig. 1) übertragen werden.

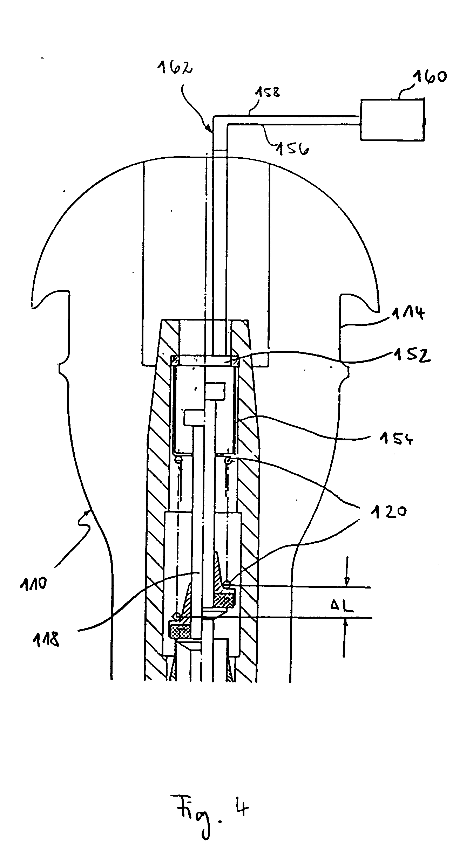

Bei dem in Fig. 4 dargestellten Reifenventil 110 wird die während des Befüllens eines Luftreifens auftretende Verschiebung des Ventilgliedes 118 von der Geschlossen-in die Offenstellung mit Hilfe eines piezoelektrischen Elementes 152 festgestellt. Wird das Ventilglied 118 um die Wegstrecke $\Delta$ L verschoben, so nimmt die von der Vorspannfeder 120 auf ihre Abstützung 154 und über diese auf das piezoelektrische Element 152 ausgeübte Kraft um den Betrag $F = c \cdot \Delta L$, mit c = Federkonstante der Vorspannfeder 120, zu. Aufgrund der Änderung der auf das piezoelektrische Element 152 ausgeübten Kraft gibt dieses über seine Anschlußleitungen 156 und 158 ein elektrisches Signal an das Schaltungsteil 160 einer insgesamt mit 162 bezeichneten Sensoreinrichtung ab. Dieses elektrische Signal wird im Schaltungsteil 160 aufbereitet und anschließend zu einer in der Figur 4 nicht dargestellten zentralen Überwachungseinheit übertragen, um dort die Betriebsart "Befüllen" auszulösen.

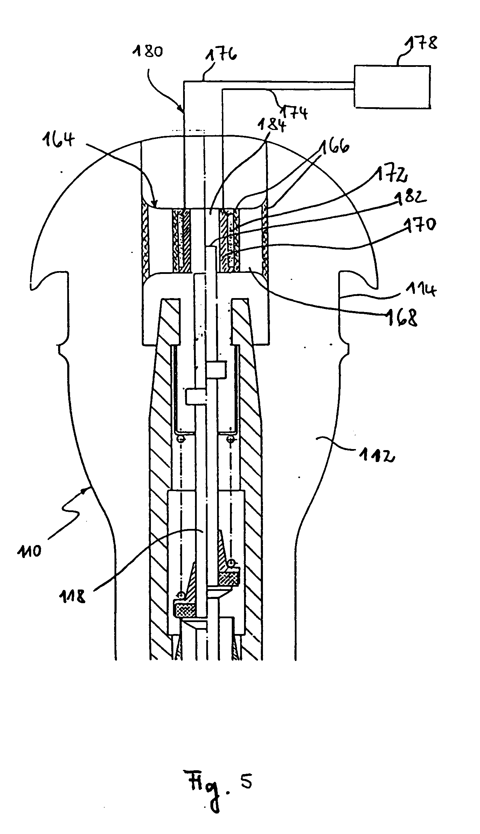

Bei dem in Fig. 5 dargestellten Reifenventil 110 ist in den Ventilkörper 112 nahe seinem dem Luftreifen zugewandten Ende zum Feststellen der Verschiebebewegung des Ventilgliedes 118 beim Befüllen des Luftreifens eine Spulenanordnung 164 eingesetzt. Diese besteht aus einer in den Ventilkörper 112 eingeklebten oder einvulkanisierten Halterung 166 mit Öffnungen 168 zum Luftdurchtritt, einem Spulenkörper 170 und einer darauf aufgewickelten Spule 172. Diese ist mit ihren Anschlüssen über elektrische Leitungen 174 und 176 mit dem elektronischen Schaltungsteil 178 einer insgesamt mit 180 bezeichneten Sensoreinrichtung verbunden.

Wird nun das aus einem ferromagnetischen Material, beispielsweise Eisen, bestehende Ventilglied 118 beim Befüllen des Luftreifens von der Geschlossen- in die Offenstellung bewegt, so taucht das Ende 182 des Ventilgliedes 118 in die Öffnung 184 des Spulenkörpers 170 ein. Durch die dadurch bedingte Induktivitätsänderung wird in der Wicklung der Spule 172 eine elektrische Spannung induziert. Dieses Signal wird in der elektronischen Schaltung 178 aufbereitet und von dort zu einer in der Fig. 5 nicht dargestellten zentralen Überwachungseinheit übertragen.

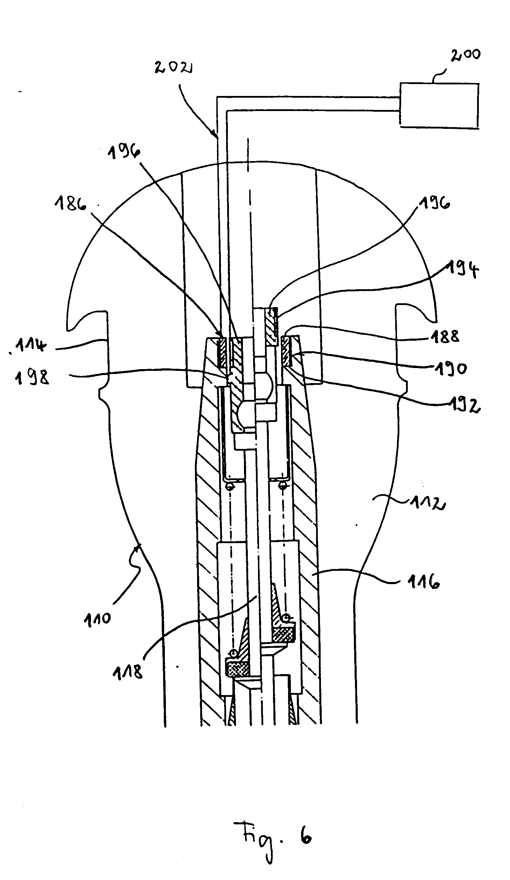

Um bei dem in Fig. 6 dargestellten Reifenventil 110 die beim Befüllen des Luftreifens auftretende Verschiebung des Ventilgliedes 118 feststellen zu können, ist im Inneren des Ventilkörpers 112 ein Zylinderkondensator 186 vorgesehen, dessen äußerer Zylindermantel 188, durch eine Isolationsschicht 190 getrennt, in eine Nut 192 der Ventilgliedführung 116 eingesetzt ist und dessen innerer Zylindermantel 194 in einen Isolationskörper 196 eingesetzt ist, der seinerseits am Ventilglied 118 befestigt ist. Zur Zentrierung des inneren Zylindermantels 194 im äußeren Zylindermantel 188 sind am Isolationskörper 196 mindestens drei in Umfangsrichtung gleichmäßig verteilte Führungsnoppen 198 vorgesehen.

Wie aus der linken Hälfte von Fig. 6 zu erkennen ist, stehen sich die beiden Zylindermäntel 188 und 194 des Zylinderkondensators 186 in der Geschlossenstellung des Ventilgliedes 118 mit einer maximalen Überlappungsfläche gegenüber. In dieser Stellung des Ventilgliedes 118 hat der Zylinderkondensator 186 seine größtmögliche Kapazität. Wird nun das Ventilglied 118 beim Befüllen eines Luftreifens von seiner Geschlossen- in die Offenstellung verschoben, so wird der mit dem Ventilglied 118 ortsfest verbundene innere Zylindermantel 194 aus dem Innenbereich des Zylindermantels 188 hinausbewegt, mit der Folge, daß die Kapazität des Kondensators 186 nahezu den Wert Null annimmt. Diese Kapazitätsänderung wird in der elektronischen Schaltung 200 der insgesamt mit 202 bezeichneten Sensoreinrichtung in das Befüllmodus-Signal umgesetzt.

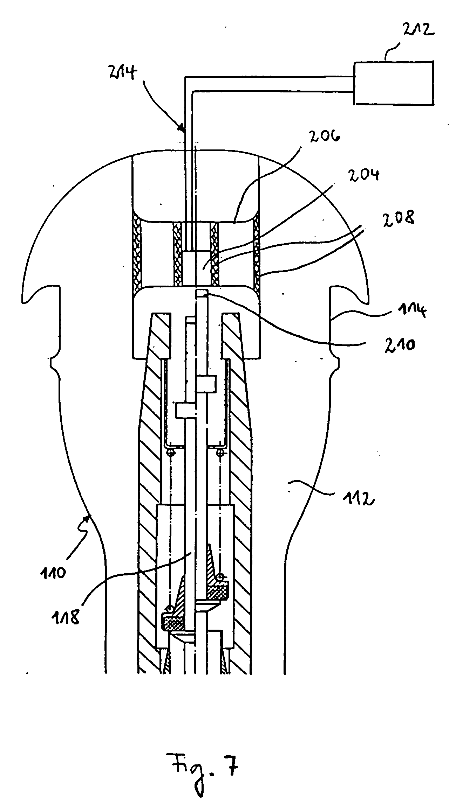

Bei dem in Fig. 7 dargestellten Reifenventil 110 ist in das Innere des Ventilkörpers 112 nahe seinem dem Luftreifen zugewandten Ende ein Hall-Sensor 204 mit Hilfe einer mit Luftdurchtrittsöffnung 206 versehenen Halterung 208 eingesetzt. Am Ventilglied 118 ist an dem dem Hall-Sensor 204 zugewandten Ende ein Magnet 210 angeordnet.

Wenn beim Befüllen eines Luftreifens das Ventilglied 118 von seiner Geschlossen- in seine Offenstellung bewegt wird, wird der Magnet 210 dem Hall-Sensor 204 angenähert, wodurch in diesem ein elektrisches Signal erzeugt wird, welches in der elektronischen Schaltung 212 der insgesamt mit 214 bezeichneten Sensoreinrichtung aufbereitet wird. Das aufbereitete Befüllmodus-Signal wird zu einer in der Fig. 7 nicht dargestellten zentralen Überwachungseinheit übertragen, welche dadurch von der Betriebsart "Überwachen" in die Betriebsart "Befüllen" umgeschaltet wird. In der Betriebsart "Befüllen" (Befüllmodus) wird der Luftdruck im gerade befüllten Fahrzeugreifen mit einer im Vergleich zur Betriebsart "Überwachen" (Überwachungsmodus) höheren Taktfrequenz überprüft. Die Taktzeit muß im Befüllmodus deutlich kürzer sein als die Befüllzeit des Fahrzeugreifens.

**Patentansprüche**

1.   Verfahren zum fülldruckrichtigen Befüllen eines Luftreifens (10, 12, 14, 16, 18) eines Fahrzeugs mit einer fahrzeugeigenen Luftreifenfülldrucküberwachungseinrichtung (60), und den einzelnen Luftreifen (10, 12, 14, 16, 18) des Fahrzeugs zugeordneten Sensoreinrichtungen (20, 22, 24, 26, 28), die ihre Meßwerte zu einer zentralen Überwachungseinheit (60) übertragen, wobei während des Befüllens eines Luftreifens (10, 12, 14, 16, 18) mit Hilfe eines separaten Befüllgerätes der von der zentralen Überwachungseinheit (60) jeweils ermittelte aktuelle Fülldruckzustand des betreffenden Luftreifens (10, 12, 14, 16, 18) der Bedienperson des Befüllgerätes zur Befüllführung übermittelt wird,
dadurch gekennzeichnet, daß in der zentralen Überwachungseinheit (60) der von der jeweiligen Sensoreinrichtung (20, 22, 24, 26, 28) übertragene Fülldruck-Istwert mit dem zugeordneten individuell bestimmten Fülldruck-Sollwert eines Luftreifens (10, 12, 14, 16, 18) verglichen wird zur Ermittlung des jeweiligen einen zu hohen, einen zu niedrigen oder den ordnungsgemäßen Fülldruck angebenden Fülldruckzustandes.

2.   Verfahren nach Anspruch 1, dadurch gekennzeichnet, daß die Übermittlung des jeweiligen Fülldruckzustandes von der zentralen Überwachungseinheit (60) zur Bedienperson des Befüllgerätes auf akustischem Wege, insbesondere durch ein akustisches Signal mit für die einzelnen Fülldruckzustände unterschiedlichen Frequenzen oder Lautstärken erfolgt.

3.   Verfahren nach Anspruch 1, dadurch gekennzeichnet, daß die Übermittlung des jeweiligen Fülldruckzustandes von der zentralen Überwachungseinheit (60) zur Bedienperson des Befüllgerätes durch Ansteuerung der Blinklampe des Fahrzeuges mit für die einzelnen Fülldruckzustände unterschiedlichen Frequenzen erfolgt.

4.   Verfahren nach Anspruch 1, dadurch gekennzeichnet, daß der jeweilige Fülldruckzustand von der zentralen Überwachungseinheit (60) zu einer von der Bedienperson des Befüllgerätes mitgeführten Fülldruckzustandsanzeigeeinrichtung (64) übertragen und durch diese der Bedienperson angezeigt wird.

5.   Verfahren nach Anspruch 4, dadurch gekennzeichnet, daß der jeweilige Fülldruckzustand über eine elektrische Kabelverbindung von der zentralen Überwachungseinheit (60) zur Fülldruckzustandsanzeigeeinrichtung (64) übertragen wird.

6.   Verfahren nach Anspruch 4, dadurch gekennzeichnet, daß der jeweilige Fülldruckzustand zumindest teilweise auf optischem Wege von der zentralen Überwachungseinheit (60) zur Fülldruckzustandsanzeigeeinrichtung (64) übertragen wird.

7.   Verfahren nach Anspruch 6, dadurch gekennzeichnet, daß der jeweilige Fülldruckzustand eines Luftreifens (10) zunächst über eine elektrische Kabelverbindung zu einer an der Fahrzeugseite des betreffenden Luftreifens (10) angeordneten optischen Sendeeinrichtung und dann von dort auf optischem Wege zu einer in der Fülldruckzustandsanzeigeeinrichtung (64) angeordneten optischen Empfangseinrichtung übertragen wird.

8.   Verfahren nach Anspruch 7, dadurch gekennzeichnet, daß bei einem Fahrzeug mit auf beiden Fahrzeugseiten angeordneten Außenrückblickspiegeln die für beide Fahrzeugseiten vorgesehenen optischen Sendeeinrichtungen in oder an den Gehäusen bzw. Halterungen der Außenrückblickspiegel angeordnet werden.

9. Verfahren nach Anspruch 4, dadurch gekennzeichnet, daß der jeweilige Fülldruckzustand zumindest teilweise auf elektromagnetischem Wege von der zentralen Überwachungseinheit (60) zur Fülldruckzustandsanzeigeeinrichtung (64) übertragen wird.

10. Verfahren nach Anspruch 9, dadurch gekennzeichnet, daß bei einer Luftreifenfülldrucküberwachungseinrichtung mit in Nähe der Räder des Fahrzeuges ortsfest angeordneten Übertragerspulen (40, 42, 44, 46, 48), die einerseits zur Energieversorgung der mit den Fahrzeugrädern umlaufenden Sensoreinrichtungen (20, 22, 24, 26, 28) an einen Wechselspannungsgenerator, insbesondere Rechteckspannungsgenerator und andererseits zur Übertragung mindestens des Fülldruck-Istwertes in den einzelnen Luftreifen (10, 12, 14, 16, 18) in den Spannungspausen des Wechselspannungsgenerators an die zentrale Überwachungseinheit (60) angeschlossen sind, und mit umlaufenden, an den einzelnen Fahrzeugrädern befestigten und mit den ortsfesten Übertragerspulen (40, 42, 44, 46, 48) zusammenwirkenden weiteren Übertragerspulen (30, 32, 34, 36, 38), die zur Energieversorgung einerseits und zur Übertragung mindestens des Fülldruck-Istwertes in den einzelnen Luftreifen (10, 12, 14, 16, 18) andererseits mit den Sensoreinrichtungen (20, 22, 24, 26, 28) der einzelnen Fahrzeugräder verbunden sind, der jeweilige Fülldruckzustand eines Luftreifens (10) durch Amplituden- oder Pausenkodierung des Wechselspannungssignals des Wechselspannungsgenerators zu dem betreffenden Radübertrager (30, 40) übertragen wird und daß der jeweilige Fülldruckzustand des Luftreifens (10) von der beim Befüllen in der Nähe des betreffenden Fahrzeugrades befindlichen Fülldruckzustandsanzeigeeinrichtung (64) durch Dekodieren des während der Übertragung des Wechselspannungssignals vom Radübertrager (30, 40) erzeugten elektromagnetischen Streufeldes regeneriert und angezeigt wird.

11. Verfahren nach Anspruch 10, dadurch gekennzeichnet, daß bei der Pausenkodierung des Wechselspannungssignales dieses an einer bestimmten Stelle für eine vom jeweiligen Fülldruckzustand des gerade befüllten Luftreifens (10) abhängige Zeitspanne unterbrochen wird.

12. Verfahren nach einem der vorhergehenden Ansprüche, dadurch gekennzeichnet, daß die zentrale Überwachungseinheit (60) nur während des Befüllens eines Luftreifens (10) vom Überwachungsmodus, bei dem die Fülldrücke der einzelnen Luftreifen (10, 12, 14, 16, 18) lediglich überwacht und ein kritischer Fülldruckzustand eines Luftreifens im Fahrzeug angezeigt wird, in den Befüllmodus umgeschaltet wird, bei dem der von der zentralen Überwachungseinheit (60) jeweils nur für den gerade befüllten Luftreifen (10) ermittelte aktuelle Fülldruckzustand der Bedienperson des Befüllgerätes zur Befüllführung ibermittelt wird.

13. Verfahren nach Anspruch 12, dadurch gekennzeichnet, daß im Befüllmodus der zentralen Überwachungseinheit (60) mindestens der Istwert des Fülldruckes des gerade befüllten Luftreifens mit einer im Vergleich zur Abfragefrequenz im Übertragungsmodus der zentralen Überwachungseinheit (60) deutlich höheren Frequenz abgefragt wird.

14. Verfahren nach Anspruch 13, dadurch gekennzeichnet, daß die Abfragefrequenz im Befüllmodus der zentralen Überwachungseinheit (60) um den Faktor 4 oder 5 größer ist als die Abfragefrequenz im Überwachungsmodus der zentralen Überwachungseinheit (60).

15. Verfahren nach einem der Ansprüche 12 bis 14, dadurch gekennzeichnet, daß die zentrale Überwachungseinheit (60) bei Feststellen einer großen Änderung, insbesondere eines steilen Anstiegs des Istwertes des Fülldruckes in einem der Luftreifen (10, 12, 14, 16, 18) des Fahrzeuges vom Überwachungsmodus in den Befüllmodus umgeschaltet wird.

16. Verfahren nach einem der Ansprüche 12 bis 14, dadurch gekennzeichnet, daß die zentrale Überwachungseinheit (60) bei Fahrzeugluftreifen, die jeweils über ein Reifenventil (110) mit darin verschiebbar angeordnetem Ventilglied (118) befüllbar sind, in Abhängigkeit von der Stellung bzw. Verschiebebewegung des Ventilgliedes (118) vom Überwachungsmodus in den Befüllmodus umgeschaltet wird.

17. Reifenfülldrucküberwachungseinrichtung zur Durchführung des Verfahrens nach Anspruch 16, mit den einzelnen Fahrzeugluftreifen zugeordneten Sensoreinrichtungen (142, 162, 180, 202, 214) zur Messung und Übertragung mindestens des Fülldruckes der einzelnen Luftreifen zu der vom Überwachungsmodus in den Befüllmodus umschaltbaren zentralen Überwachungseinheit (60), dadurch gekennzeichnet, daß die Sensoreinrichtung (142, 162, 180, 202, 214) eines gerade über ein Reifenventil (110) mit darin verschiebbar angeordnetem Ventilglied (118) befüllten Luftreifens in der Offenstellung des Ventilgliedes (118) bzw. aufgrund der Verschiebebewegung von der Geschlossen- in die Offenstellung ein Befüllmodussignal erzeugt und zur zentralen Überwachungseinheit (60) überträgt, durch das diese in den Befüllmodus umgeschaltet wird.

18. Reifenfülldrucküberwachungseinrichtung nach Anspruch 17, dadurch gekennzeichnet, daß jede Sensoreinrichtung (142) zwei elektrische Kontakte (128, 130) umfaßt, die durch das Ventilglied (118) bei Erreichen seiner Offenstellung zur Erzeugung des Befüllmodus-Signals miteinander galvanisch verbunden werden.

19. Reifenfülldrucküberwachungseinrichtung nach Anspruch 18, dadurch gekennzeichnet, daß die elektrischen Kontakte (128, 130) im Inneren des Ventilkörpers (112) nahe dem dem Reifeninneren zugewandten Ende des Reifenventils (110) angeordnet sind.

20. Reifenfülldrucküberwachungseinrichtung nach Anspruch 19, dadurch gekennzeichnet, daß die elektrischen Kontakte (128, 130) elektrisch isoliert im Inneren des Ventilkörpers (112) angeordnet sind und daß das die elektrischen Kontakte (128, 130) ggf. verbindende Teil (132) des Ventilglieds an dessen übrigen Teil elektrisch isoliert angeordnet ist.

21. Reifenfülldrucküberwachungseinrichtung nach Anspruch 17, mit einem Reifenventil, dessen Ventilglied durch eine Vorspannfeder in Richtung seiner Geschlossenstellung belastet ist, dadurch gekennzeichnet, daß jede Sensoreinrichtung (162) ein piezoelektrisches Element (152) umfaßt, an dem sich ein Ende der Vorspannfeder (120) abstützt und das aufgrund der Zunahme der auf das piezoelektrische Element (152) einwirkenden Federkraft beim Verschieben des Ventilgliedes (118) von der Geschlossen- in die Offenstellung das Befüllmodus-Signal erzeugt.

22. Reifenfülldrucküberwachungseinrichtung nach Anspruch 17, mit einem Reifenventil, dessen Ventilglied mindestens teilweise aus einem ferromagnetischen Material besteht, dadurch gekennzeichnet, daß jede Sensoreinrichtung (180) eine elektromagnetische Spule (172) umfaßt, in die zumindest der ferromagnetische Teil des Ventilgliedes (118) bei Erreichen seiner Offenstellung eintaucht und dabei in der Spulenwicklung das Befüllmodus-Signal erzeugt.

23. Reifenfülldrucküberwachungseinrichtung nach Anspruch 17, dadurch gekennzeichnet, daß jede Sensoreinrichtung (202) einen Kondensator (186) umfaßt, dessen Elektrode (188) elektrisch isoliert im Inneren des Ventilkörpers (112) ortsfest angeordnet ist und dessen andere Elektrode (194) am Ventilglied (118) elektrisch isoliert derart befestigt ist, daß eine Verschiebung des Ventilgliedes (118) von der Geschlossen- in die Offenstellung eine Kapazitätsänderung des Kondensators (186) bewirkt, aufgrund der das Befüllmodus-Signal erzeugt wird.

24. Reifenfülldrucküberwachungseinrichtung nach Anspruch 23, dadurch gekennzeichnet, daß der Kondensator (186) als Zylinderkondensator ausgebildet ist.

25. Reifenfülldrucküberwachungseinrichtung nach Anspruch 17, dadurch gekennzeichnet, daß jede Sensoreinrichtung (214) einen im Inneren des Ventilkörpers (112) angeordneten Hall-Sensor (204) umfaßt, der bei durch die Verschiebebewegung des Ventilgliedes (118) von der Geschlossen- in die Offenstellung bedingten Annäherung eines am Ventilglied (118) angeordneten Magneten (210) das Befüllmodus-Signal erzeugt.

**Claims**

1. A method of correctly inflating a tyre (10, 12, 14, 16, 18) of a vehicle fitted with a tyre pressure monitor (60) and sensors (20, 22, 24, 26, 28) associated with the individual vehicle tyres (10, 12, 14, 16, 18) and transmitting measurements to a central monitoring unit (60), wherein, while a tyre (10, 12, 14, 16, 18) is being inflated by a separate inflation device, the actual pressure level of the respective tyre (10, 12, 14, 16, 18) detected by the central monitoring unit (60) is transmitted to the operator of the tyre-inflating device, characterised in that, in the central monitoring unit (60), the actual pressure transmitted by the respective sensor (20, 22, 24, 26, 28) is compared with the associated individually-determined set pressure of a tyre (10, 12, 14, 16, 18) in order to determine whether the respective pressure level is too high, too low or correct.

2. A method according to claim 1, characterised in that the respective pressure level is transmitted by the central monitoring unit (60) to the operator by acoustic means, more particularly by an acoustic signal at a frequency or volume which varies with the individual pressure levels.

3. A method according to claim 1, characterised in that the respective pressure level is transmitted by the central monitoring unit (60) to the operator by actuating the vehicle blinker light(s) at a frequency which varies with the individual pressure levels.

4. A method according to claim 1, characterised in that the respective pressure level is transmitted by the central monitoring unit (60) to a pressure level indicator (64) carried by the tyre-inflating operator, who is thus informed.

5. A method according to claim 4, characterised in that the respective pressure level is transmitted by an electric cable connection from the central monitoring unit (60) to the pressure level indicator (64).

6. A method according to claim 4, characterised in that the respective pressure level is transmitted at least partly by optical means from the central monitoring unit (60) to the pressure level indicator (64).

7. A method according to claim 6, characterised in that the pressure level of each respective tyre (10) is transmitted first via an electric cable connection to an optical transmitter disposed on the same side of the vehicle as the respective tyre (10) and thence by optical means to an optical receiver disposed in the pressure level indicator (64).

8. A method according to claim 7, characterised in that, in the case of a vehicle having outer rear-view mirrors on both sides, the optical transmitters for both sides of the vehicle are disposed in or on the casings or holders of the outer rear-view mirror.

9. A method according to claim 4, characterised in that the respective filling level is transmitted at least partly by electromagnetic means from the central monitoring unit (60) to the pressure level indicator (64).

10. A method according to claim 9, characterised in that, in the case of a tyre pressure monitoring device comprising stationary repeating coils (40, 42, 44, 46, 48) disposed near the vehicle wheels and connected on the one hand to an a.c. voltage generator, more particularly a square-wave voltage generator for supplying energy to the sensors (20, 22, 24, 26, 28) rotating with the vehicle wheels and also connected to the central monitoring unit (60) for transmitting at least the actual pressure value in the individual tyres (10, 12, 14, 16, 18) during the voltage intervals of the a.c. voltage generator, the device also comprising additional rotating repeater coils (30, 32, 34, 36, 38) secured to the individual vehicle wheels and co-operating with the stationary repeating coils (40, 42, 44, 46, 48) and connected to the sensors (20, 22, 24, 26, 28) of the individual wheels in order on the one hand to supply energy and on the other hand to transmit at least the actual pressure value in the individual tyres (10, 12, 14, 16, 18), the pressure level in each respective tyre (10) is transmitted to the respective repeating coil (30, 40) by amplitude or space coding of the a.c. voltage signal of the a.c. voltage generator, and the pressure level of the respective tyre (10) is regenerated and displayed by the pressure level indicator (64) near the respective vehicle wheel during the inflating process by decoding the electromagnetic stray field generated by the repeating coil (30, 40) during transmission of the a.c. voltage signal.

11. A method according to claim 10, characterised in that the a.c. voltage signal, during space coding thereof, is interrupted at a certain place and for a time depending on the pressure level of the respective just-inflated tyre (10).

12. A method according to any of the preceding claims, characterised in that, during and only during inflation of a tyre (10), the central monitoring unit (60) is switched over from the monitoring mode, in which the pressures of the individual tyres (10, 12, 14, 16, 18) are only monitored and any critical pressure level of a tyre is displayed in the vehicle, to the inflation mode in which the actual pressure level of the just-inflated tyre (10) determined by the central monitoring unit (60) is communicated to the operator of the tyre-inflating device.

13. A method according to claim 12, characterised in that, during the inflating mode of the central monitoring unit (60), at least the actual pressure value of the just-inflated tyre is scanned at a much higher frequency than the scanning frequency during the transmission mode of the central monitoring unit (60).

14. A method according to claim 13, characterised in that the scanning frequency in the inflating mode of the central monitoring unit (60) is greater by a factor of 4 or 5 than the scanning frequency in the monitoring mode of the central monitoring unit (60).

15. A method according to any of claims 12 to 14, characterised in that the central monitoring unit (60) is switched over from the monitoring to the inflating mode on determining a large change, more particularly a rapid increase in the actual value of the pressure in one of the vehicle tyres (10, 12, 14, 16, 18).

16. A method according to any of claims 12 to 14, characterised in that, in the case of vehicle tyres which are inflatable through a valve (110) containing a movable valve element (118), the central monitoring unit is switched over from the monitoring mode to the inflating mode in dependence on the position or the distance travelled by the valve element (118).

17. A tyre pressure monitoring device for working the method according to claim 16, comprising sensors (142, 162, 180, 202, 214) associated with the individual tyres for measuring and transmitting at least the pressure of the individual tyres to the central monitoring unit (60) which is switchable from the monitoring mode to the inflating mode, characterised in that the sensor (142, 162, 180, 202, 214) on each tyre just inflated through a valve (110) containing a movable valve element (118) generates an inflating-mode signal when the valve element (118) is in the open position or on the basis of the distance travelled from the closed into the open position, and transmits the signal to the central monitoring unit (60) so as to switch it into the inflating mode.

18. A tyre pressure monitoring device according to claim 17, characterised in that each sensor (142) has two electric contacts (128, 130) which are electrically connected by the valve element (118) in order to generate the inflating-mode signal when the valve element reaches its open position.

19. A tyre pressure monitoring device according to claim 18, characterised in that the electric contacts (128, 130) are disposed inside the valve body (112) near the end of the valve (110) facing the interior of the tyre.

20. A tyre pressure monitoring device according to claim 19, characterised in that the electric contacts (128, 130) are electrically insulated inside the valve body (112) and the part (132) of the valve element which connects the electric contacts (128, 130) is electrically insulated from the rest of the valve element.

21. A tyre pressure monitoring device according to claim 17, comprising a tyre valve having a valve element biased towards the closed position by a spring, characterised in that each sensor (162) comprises a piezoelectric element (152) which abuts one end of the biasing spring (120) and which, owing to the increase in the spring force acting on the piezoelectric element (152), generates the inflating-mode signal when the valve element (118) moves from the closed to the open position.

22. A tyre pressure monitoring device according to claim 17, comprising a tyre valve having an element made at least partly of ferromagnetic material, characterised in that each sensor (180) comprises an electromagnetic coil (172) into which at least the ferromagnetic part of the valve element (118) dips when reaching its open position and thus generates the inflating-mode signal in the coil winding.

23. A tyre pressure monitoring device according to claim 17, characterised in that each sensor (202) comprises a capacitor (186) having an electrode (188) which is electrically insulated and stationary inside the valve body (112), whereas its other electrode (194) is electrically insulated and connected to the valve element (118) so that movement of the valve element (118) from the closed to the open position changes the capacitance of the capacitor (186), thus generating the inflating-mode signal.

24. A tyre pressure monitoring device according to claim 23, characterised in that the capacitor (186) is a cylindrical capacitor.

25. A tyre pressure monitoring device according to claim 17, characterised in that each sensor (214) comprises a Hall sensor (204) disposed inside the valve body (112) and generating the inflating-mode signal when brought near to a magnet (210) disposed on the valve element (118) after the valve element (118) has moved from the closed to the open position.

**Revendications**

1. Procédé pour le gonflage à une pression correcte d'un pneumatique (10, 12, 14, 16, 18) d'un véhicule avec un dispositif (60) propre au véhicule pour le contrôle de la pression de gonflage des pneumatiques, et avec des dispositifs de détection (20, 22, 24, 26, 28) associés aux différents pneumatiques (10, 12, 14, 16, 18) du véhicule, et qui transmettent leur valeur de mesure à une unité centrale de contrôle (60), tandis que pendant le gonflage d'un pneumatique (10, 12, 14, 16, 18) à l'aide d'un appareil de gonflage distinct, l'état actuel de la pression de gonflage du pneumatique concerné (10, 12, 14, 16, 18), détecté par l'unité centrale de contrôle (60) est transmis à l'opérateur de l'appareil de gonflage pour conduire le gonflage, procédé caractérisé en ce que dans l'unité centrale de contrôle (60) la valeur réelle de la pression de gonflage transmise à partir du dispositif de détection considéré (20, 22, 24, 26, 28) est comparée avec la valeur de consigne de la pression de gonflage correspondante, déterminée individuellement d'un pneumatique (10, 12, 14, 16, 18) pour détecter l'état de la pression de gonflage indiquant respectivement une pression de gonflage trop élevée, une pression de gonflage trop basse ou bien la pression de gonflage correcte.

2. Procédé selon la revendication 1, caractérisé en ce que la transmission de l'état momentané de la pression de gonflage depuis l'unité centrale de contrôle (60) à l'opérateur de l'appareil de gonflage, s'effectue par voie acoustique, notamment par un signal acoustique avec des fréquences ou des intensités sonores différentes pour les différents états de la pression de gonflage.

3. Procédé selon la revendication 1, caractérisé en ce que la transmission de l'état momentané de la pression de gonflage à partir de l'unité centrale de contrôle (60) vers l'opérateur de l'appareil de gonflage, s'effectue par commande des clignotants du véhicule avec des fréquences différentes pour les différents états de la pression de gonflage.

4. Procédé selon la revendication 1, caractérisé en ce que l'état momentané de la pression de gonflage est transmis par l'unité centrale de contrôle (60) à un dispositif d'indication (64) de l'état de la pression de gonflage contrôlé par l'opérateur de l'appareil de gonflage, et est indiqué par ce dispositif à cet opérateur.

5. Procédé selon la revendication 4, caractérisé en ce que l'état momentané de la pression de gonflage est transmis par l'intermédiaire d'une liaison par câble électrique de l'unité centrale de contrôle (60) au dispositif (64) d'indication de l'état de la pression de gonflage.

6. Procédé selon la revendication 4, caractérisé en ce que l'état momentané de la pression de gonflage est transmis, tout au moins partiellement, par voie optique de l'unité centrale de contrôle (60) au dispositif (64) d'indication de l'état de la pression de gonflage.

7. Procédé selon la revendication 6, caractérisé en ce que l'état momentané de la pression de gonflage d'un pneumatique (10) est tout d'abord transmis par l'intermédiaire d'une liaison électrique par câble à un dispositif d'émission optique disposé sur le côté du véhicule où se trouve le pneumatique concerné (10), et est ensuite transmis à partir de là par voie optique à un dispositif de réception optique disposé dans le dispositif d'indication (64) de l'état de la pression de gonflage.

8. Procédé selon la revendication 7, caractérisé en ce que dans le cas d'un véhicule comportant sur les deux côtés des rétroviseurs, les dispositifs d'émission optique prévus pour les deux côtés du véhicule, sont disposés dans ou sur les boîtiers ou bien les supports des rétroviseurs.

9. Procédé selon la revendication 4, caractérisé en ce que l'état momentané de la pression de gonflage est transmis au moins partiellement par voie électromagnétique de l'unité centrale de contrôle (60) au dispositif d'indication (64) de l'état de la pression de gonflage.

10. Procédé selon la revendication 9, caractérisé en ce que, dans le cas d'un dispositif de contrôle de la pression de gonflage des pneumatiques comportant au voisinage des roues du véhicule, des bobines de transmission disposées à poste fixe (40, 42, 44, 46, 48), qui, d'une part, pour permettre à l'alimentation en énergie des dispositifs de détection (20, 22, 24, 26, 28) tournant avec les roues du véhicule, sont raccordées à un générateur de tension alternative, notamment un générateur de tension rectangulaire, et qui d'autre part, pour permettre la transmission d'au moins la valeur réelle de la pression de gonflage dans les différents pneumatiques (10, 12, 14, 16, 18) au cours des pauses de tension du générateur de tension alternative, sont raccordées à l'unité centrale de contrôle (60), et avec d'autres bobines de transmission (30, 32, 34, 36, 38) tournantes, fixées aux différentes roues du véhicule, et coopérant avec les bobines de transmission à poste fixe (40, 42, 44, 46, 48) et qui pour permettre l'alimentation en énergie d'une part, et pour la transmission d'au moins la valeur réelle de la pression de gonflage dans les différents pneumatiques (10, 12, 14, 16, 18) d'autre part, sont reliées au dispositif de détection (20, 22, 24, 26, 28) des différentes roues du véhicule, tandis que l'état momentané de la pression de gonflage d'un pneumatique (10) est transmis par codage des amplitudes ou des pauses du signal de tension alternative du générateur de tension alternative aux transmetteurs de roues (30, 40) concernés et en ce que l'état momentané de la pression de gonflage du pneumatique (10) est régénéré et indiqué par le dispositif d'indication (64) de l'état de la pression de gonflage se trouvant lors du gonflage au voisinage de la roue concernée du véhicule, par décodage du champ électromagnétique de fuite produit par le transmetteur de roue (30, 40) pendant la transmission du signal de tension alternative.

11. Procédé selon la revendication 10, caractérisé en ce que lors du codage des pauses du signal de tension alternative, celui-ci est interrompu à un emplacement déterminé pour un intervalle de temps dépendant de l'état momentané de la pression de gonflage du pneumatique (10) en cours de gonflage.

12. Procédé selon une des précédentes revendications, caractérisé en ce que c'est seulement pendant le gonflage d'un pneumatique (10) que l'unité centrale de contrôle (60) est commutée du mode contrôle dans lequel la pression de gonflage des différents pneumatiques (10, 12, 14, 16, 18) est seulement contrôlée et à l'état critique de la pression de gonflage d'un pneumatique indiqué dans le véhicule, dans le mode gonflage dans lequel l'état actuel de la pression de gonflage détecté par l'unité centrale de contrôle (60) seulement pour le pneumatique (10) en cours de gonflage, est transmis à l'opérateur de l'appareil de gonflage pour lui permettre de conduire le gonflage.

13. Procédé selon la revendication 12, caractérisé en ce que, dans le mode gonflage de l'unité centrale de contrôle (60) au moins la valeur réelle de la pression de gonflage du pneumatique en cours de gonflage est interrogée avec une fréquence plus élevée que la fréquence d'interrogation dans le mode transmission de l'unité centrale de contrôle (60).

14. Procédé selon la revendication 13, caractérisé en ce que la fréquence d'interrogation dans le mode gonflage de l'unité centrale de contrôle

(60) est supérieur du facteur 4 ou 5 à la fréquence d'interrogation dans le mode contrôle de cette unité centrale de contrôle (60).

15. Procédé selon une des revendications 12 à 14, caractérisé en ce que l'unité centrale de contrôle (60), lors de la constatation d'une modification importante, notamment une augmentation rapide de la valeur réelle de la pression de gonflage dans un des pneumatiques (10, 12, 14, 16, 18) du véhicule, est commutée du mode contrôle dans le mode gonflage.

16. Procédé selon une des revendications 12 à 14, caractérisé en ce que l'unité centrale de contrôle (60) dans le cas de pneumatiques de véhicules qui sont susceptibles d'être gonflés par l'intermédiaire d'une valve de pneumatique (110) dans laquelle est disposé un organe de valve (118) susceptible de coulisser, est commutée du mode contrôle dans le mode gonflage en fonction de la position ou bien du mouvement de déplacement de l'organe de valve (118).

17. Dispositif de contrôle de la pression de gonflage de pneumatique pour la mise en oeuvre du procédé selon la revendication 16, avec des dispositifs de détection (142, 162, 180, 202, 214) associés aux différents pneumatiques du véhicule pour permettre la mesure et la transmission d'au moins la pression de gonflage des différents pneumatiques à l'unité centrale de contrôle (60) susceptible de commuter du mode contrôle dans le mode gonflage, dispositif caractérisé en ce que le dispositif de détection (142, 462, 180, 202, 214) d'un pneumatique en cours de gonflage par l'intermédiaire d'une valve de pneumatique (110) dans laquelle est disposé un organe de valve (118) susceptible de coulisser, produit dans la position d'ouverture de l'organe de valve (118) ou bien du fait du déplacement de cet organe de la position de fermeture dans la position d'ouverture, un signal de mode de gonflage et le transmet à l'unité centrale de contrôle (60) qui est commutée par ce signal dans le mode gonflage.

18. Dispositif de contrôle de la pression de gonflage de pneumatique selon la revendication 17, caractérisé en ce que chaque dispositif de détection (142) comprend deux contacts électriques (128, 130), qui sont reliés galvaniquement entre eux par l'organe de valve (118), lorsqu'il atteint sa position d'ouverture, pour produire le signal de mode gonflage.

**19.** Dispositif de contrôle de la pression de gonflage de pneumatique selon la revendication 18, caractérisé en ce que les contacts électriques (128, 130) sont disposés à l'intérieur du corps de valve (112) au voisinage de l'extrémité de la valve (110) tournée vers l'intérieur du pneumatique.

**20.** Dispositif de contrôle de la pression de gonflage de pneumatique selon la revendication 19, caractérisé en ce que les contacts électriques (128, 130) sont disposés en étant électriquement isolés à l'intérieur du corps de valve (112), et en ce que la partie (132) de l'organe de valve, reliant les contacts électriques (128, 130), est disposée sur la partie restante de cet organe en étant électriquement isolée.

**21.** Dispositif de contrôle de la pression de gonflage de pneumatique selon la revendication 17, avec une valve de pneumatique dont l'organe de valve est sollicité par un ressort précontraint en direction de sa position de fermeture, dispositif caractérisé en ce que chaque dispositif de détection (62) comprend un élément piézo-électrique (52) sur lequel prend appui une extrémité du ressort précontraint (120), et qui, du fait de l'accroissement de la force du ressort agissant sur cet élément piézo-électrique (152) lors du déplacement de l'organe de valve (118) de sa position de fermeture dans sa position d'ouverture, produit le signal de mode gonflage.

**22.** Dispositif de contrôle de la pression de gonflage de pneumatique selon la revendication 17, avec une valve de pneumatique dont l'organe de valve est constitué au moins partiellement par un matériau ferromagnétique, dispositif caractérisé en ce que chaque dispositif de détection (180) comprend une bobine électromagnétique (172), dans laquelle plonge, tout au moins la partie ferromagnétique de l'organe de valve (118) lorsqu'il atteint sa position d'ouverture, en produisant alors dans l'enroulement de la bobine, le signal mode gonflage.

**23.** Dispositif de contrôle de la pression de gonflage de pneumatique selon la revendication 17, caractérisé en ce que chaque dispositif de détection (202) comporte un condensateur (186), dont l'électrode (188) est disposée à poste fixe à l'intérieur du corps de valve (112) en étant électriquement isolée, et dont l'autre électrode (194) est fixée en étant électriquement isolée sur l'organe de valve (118), en ce qu'un déplacement de l'organe de valve (118) de sa position de fermeture dans sa position d'ouverture, provoque une modification de la capacité du condensateur (186), sur la base de laquelle le signal mode gonflage est produit.

**24.** Dispositif de contrôle de la pression de gonflage d'un pneumatique selon la revendication 23, caractérisé en ce que le condensateur (186) est réalisé sous la forme d'un condensateur cylindrique.

**25.** Dispositif de contrôle de la pression de gonflage d'un pneumatique selon la revendication 17, caractérisé en ce que chaque dispositif de détection (214) comprend un détecteur de Hall (204) disposé à l'intérieur du corps de valve (112), et qui lors de l'approche, provoquée par le déplacement de l'organe de valve (118) de sa position de fermeture dans sa position d'ouverture, d'un aimant (210) disposé sur l'organe de valve (118), produit le signal mode gonflage.

Fig. 1

Fig. 2

Fig. 3

Fig. 4

Fig. 5

Fig. 6

Fig. 7